# EUROPÄISCHE PATENTSCHRIFT

(11) **EP 2 506 034 B1**
(45) Veröffentlichungstag und Bekanntmachung des Hinweises auf die Patenterteilung: **29.05.2013**
(21) Anmeldenummer: 11002739.8
(22) Anmeldetag: 01.04.2011
(51) Int. Cl.: G01S 17/08, E06B 9/88

(54) **Sensorvorrichtung, Sicherheitsvorrichtung, Tor und Verfahren zur Kontrolle der Bewegung**
Sensor device, safety device, door and method for controlling its movement
Dispositif de capteur, dispositif de sécurité, porte et procédé de contrôle du mouvement

(43) Veröffentlichungstag der Anmeldung: 03.10.2012
(73) Patentinhaber: Cedes AG, 7302 Landquart (CH)
(72) Erfinder: Pfiffner, Martin, 7307 Jenins (CH)
(74) Vertreter: Dobler, Markus

(56) Entgegenhaltungen:
- WO-A2-2009/090097
- DE-A1- 19 739 543
- DE-C1- 10 203 145
- JP-A- 2003 314 875

## Beschreibung

Die Erfindung betrifft eine Sensorvorrichtung zur Überwachung eines bewegbaren, in einer Führung geführten Bewegungselements in Bezug auf ungewollte Kollisionen nach dem Oberbegriff des Anspruchs 1, eine Sicherheitsvorrichtung nach dem Oberbegriff des Anspruchs 7, ein Tor nach dem Oberbegriff des Anspruchs 11 und ein Verfahren zur Kontrolle der Bewegung eines bewegbaren, in einer Führung geführten Bewegungselements nach Anspruch 12.

Aus dem Stand der Technik ist bereits aus der EP 0 902 157 A2 eine Sicherheitseinrichtung für motorisch angetriebene Tore bekannt, bei der ein Lichtvorhang gebildet werden kann, der die Torschlussebene dahingehend überwacht, ob sich Objekte darin befinden, die zu einer Kollision führen könnten.

Weitere derartige Systeme sind aus der WO 2009/090097 A2 und der JP 2003314875 A bekannt.

Aufgabe ist es, eine Sensor-, eine Sicherungsvorrichtung, ein Tor sowie ein Verfahren zur Kontrolle der Bewegung eines bewegbaren, in einer Führung geführten Bewegungselements zur Absicherung gegen ungewollte Kollisionen, vorzuschlagen, bei denen eine verbesserte Erkennung eines Hindernisses ermöglicht wird.

Die Aufgabe wird, ausgehend von einer Sensor-, einer Sicherungsvorrichtung, einem Tor bzw. einem Verfahren der eingangs genannten Art, durch die kennzeichnenden Merkmale der Ansprüche 1, 9 bzw. 10 gelöst.

Durch die in den abhängigen Ansprüchen genannten Maßnahmen sind vorteilhafte Ausführungen und Weiterbildungen der Erfindung möglich.

Dementsprechend zeichnet sich eine Sensorvorrichtung zur Absicherung eines bewegbaren, in einer Führung geführten Bewegungselementes gegen ungewollte Kollisionen dadurch aus, dass die Sensoren als Entfernungssensoren zur Bestimmung der Entfernung des Objektes ausgebildet sind.

Bei einem Bewegungselement, das bewegbar in einer Führung geführt wird, kann es sich beispielsweise um ein Tor handeln. Bei der Bewegung des Bewegungselementes, beispielsweise beim Öffnen und Schließen des Tores, kann es vorkommen, dass Objekte in den Überwachungsbereich gelangen, beispielsweise indem Personen in den Überwachungsbereich eintreten. Grundsätzlich ist es möglich, Sensoren so anzuordnen, dass sie den Bereich erfassen, der exakt vom Bewegungselement bei dessen Bewegung durchsetzt wird. Oft ist es allerdings ausreichend, die Sensoren z.B. leicht versetzt zu diesem Bewegungsbereich des Bewegungselements, davor und/oder dahinter anzuordnen. Diese Anordnung kann die Anbringung der Sensoren erleichtern und die Gefahr einer Beschädigung durch die Bewegung des regelmäßig schweren Bewegungselements verringern. In diesen Fällen kann auch der von den Sensoren erfasste Bereich leicht versetzt zum eigentlichen Bewegungsbereich des Bewegungselementes sein, ohne dass damit eine merkliche Beeinträchtigung der Sicherheit verbunden wäre. Im Sinne der Erfindung wird ein Überwachungsbereich erfasst, dessen Überwachung geeignet ist, die unter gewöhnlichen Umständen eintretenden Kollisionen zu vermeiden. Es ist beispielsweise denkbar, dass der Überwachungsbereich lediglich den Bewegungsbereich umfasst, einen Teil des Bewegungsbereichs oder einen Bereich, durch dessen Überwachung die gewöhnlich möglichen Kollisionen erfasst werden können, z.B. wenn dieser Bereich sich entsprechend nahe am Bewegungsbereich befindet. Beispielweise ist es denkbar, die Sensoren parallel zur Führung vor der Toröffnung anzuordnen.

Die Sensoren umfassen einen Sender und einen Empfänger zum Aussenden und Empfangen von elektromagnetischen Strahlen und sind derart angeordnet bzw. ausgerichtet, dass die von ihnen ausgesandten Strahlen den Überwachungsbereich durchsetzen. Die Sensoren werden in einer Reihe nebeneinander angeordnet, und zwar parallel zur Führung, d.h. die Sensoren können z.B. innerhalb oder neben der Führung angeordnet sein.

Dabei kann die Erkennung des Objektes, das ein Hindernis für die Bewegung des Bewegungselementes darstellt, dadurch verbessert werden, dass die Sensoren als Entfernungssensoren zur Bestimmung der Entfernung des Objektes ausgebildet sind. Während bei herkömmlichen Lichtschranken nur festgestellt werden kann, dass der entsprechende Lichtstrahl an irgendeiner Stelle durch ein Hindernis unterbrochen wird, kann hierdurch präziser festgestellt werden, an welcher Stelle sich das entsprechende Objekt bzw. Hindernis befindet.

Vorteilhafterweise kann also ein zusätzlicher Empfänger, der dem Sender gegenüberliegt bzw. ein zusätzlicher Reflektor, der den vom Sender angestrahlten Strahl zurückreflektiert, eingespart werden.

Bei einem Tor beispielsweise handelt es sich bei dem Bewegungsbereich um eine Ebene, wobei die Führung sich innerhalb der Ebene befindet. Dementsprechend können die Sensoren in vergleichsweise einfacher Art und Weise angeordnet und ausgerichtet werden.

Besonders vorteilhaft ist es, die Sensoren in eine Leiste zu integrieren. Diese kann in vergleichsweise einfacher Art und Weise entlang der Führung installiert werden und ermöglicht eine kompakte Bauweise.

Eine besonders einfache Ausführung wird dadurch erreicht, dass wenigstens zwei der Strahlen parallel zueinander verlaufen. Der Abstand der Strahlen bzw. der Sensoren kann durch die Anwendung bestimmt sein. Beispielsweise ist es denkbar, die Sensoren im Abstand von ca. 20 cm anzuordnen bzw. die Strahlen im Abstand von ca. 20 cm verlaufen zu lassen.

Wird ein Bewegungselement wie ein Tor in einer Führung, beispielsweise einer Führungsschiene, geführt, so können die

Strahlen entsprechend senkrecht zur Führung verlaufen. Grundsätzlich ist es aber auch möglich, die Strahlen diagonal verlaufen zu lassen, beispielsweise dann, wenn weniger Sensoren zur Verfügung stehen und über die Diagonale mit wenigen Sensoren ein weiterer Bereich erfasst werden soll. Ebenso kann aber auch ein diagonaler Strahlenverlauf dazu verwendet werden, den Überwachungsbereich besser zu erfassen, insbesondere dann, wenn zusätzlich zur senkrechten Abstrahlung auch eine schräge Abstrahlung erfolgt.

Eine besonders bevorzugte Weiterbildung der Erfindung sieht vor, die Sensorvorrichtung als Lichtvorhang auszubilden. Somit kann der gesamte oder zumindest ein wesentlicher Teil des Überwachungsbereiches erfasst werden. Insbesondere kann es vorteilhaft sein, je nach Anwendungsfall genügend Strahlen vorzusehen, welche den Raum in einer solchen Art und Weise durchsetzen, dass die meisten Hindernisse, die in den Bewegungsbereich gelangen, auch wirklich detektiert werden. Bei den meisten Bewegungselementen mit einer Führung, beispielsweise bei geführten Toren, beschreibt der Lichtvorhang in der Regel eine Ebene.

Die Entfernungssensoren können dabei grundsätzlich verschiedenartig ausgebildet sein, beispielsweise als Infrarot-Reflexionssensoren oder als Time-of-flight-Sensoren (abgekürzt TOF-Sensoren) oder aber auch als 3D-Sensoren. Zudem kann eine Ausführungsform vorsehen, verschiedene dieser Sensoren in Kombination einzusetzen. Bei Time-of-flight-Sensoren kann eine Distanzmessung durch Auswertung der Laufzeit des Lichtes erfolgen. Hierzu kann beispielsweise ein Signal auf das ausgesendete Licht aufmoduliert werden. Beispielsweise wird eine im Vergleich zur Lichtfrequenz niederfrequente Schwingung auf das Licht aufmoduliert und deren Phasenverschiebung vermessen, um die entsprechende Distanz zu bestimmen. Während bei der Verwendung von 2D-Sensoren lediglich eine Aussage möglich ist, ob sich innerhalb des betrachteten Strahls ein Objekt befindet, ermöglichen so genannte 3D-Sensoren innerhalb einer entsprechenden Ebene auch noch Distanzwerte zum Objekt zu liefern. Ferner ist es möglich, Infrarotlicht-Sensoren einzusetzen, da der Infrarotbereich grundsätzlich nicht sichtbar ist, InfrarotSensoren aber auch vielfältig in der Technik Anwendung finden können, können diese in vorteilhafter Weise grundsätzlich auch hier eingesetzt werden.

Ferner ist es möglich, dass die Strahlen wenigstens eines der Sensoren nicht nur eine Linie beschreiben, sondern einen kegelförmigen Bereich durchsetzen, etwa um eine bessere Erfassung von Objekten zu ermöglichen.

In vielen Fällen wird es ferner ausreichend sein, die Sensoren auf einer Seite des Bewegungsbereiches anzuordnen. Zum einen können hierdurch Kosten eingespart werden, zum anderen wird beispielsweise bei einer Distanzmessung, die senkrecht von der Führung ab verläuft, immer der gleiche Abstand zur Führungsschiene bestimmt. Eine Anordnung der Sensoren von mehreren Seiten kann jedoch auch dann erforderlich sein, wenn beispielsweise die Ausdehnung des Objektes bestimmt werden soll oder bestimmt werden soll, wie viele Objekte sich im Bewegungsbereich befinden. Da ein herkömmlicher Entfernungssensor, der auf einer Seite des Bewegungsbereiches angebracht ist, nur die Distanz des sich im Überwachungsbereich bzw. in seinem Erfassungsbereich befindenden Objektes ermittelt, ist unklar, wie weit sich das entsprechende Objekt auf der dem Sensor abgewandten Seite noch im Bewegungsbereich befindet.

Grundsätzlich ist es denkbar, zusätzlich zu den Entfernungssensoren wenigstens einen als Lichtschranke ausgebildeten Sensor vorzusehen. Durch eine derartige Kombination wird eine möglichst gute Sicherheit bei der Bewegung des Bewegungselementes ermöglicht.

Dementsprechend umfasst die erfindungsgemäße Sicherungsvorrichtung eine Elektronikeinheit, mit der die von den Sensoren bestimmten Daten, also Messwerte oder dergleichen, ausgelesen werden können. Eine Verbindung zwischen den Sensoren und der Elektronikeinheit kann fest verdrahtet oder drahtlos erfolgen. Ferner kann die Elektronikeinheit in die Sensorvorrichtung, etwa die Leiste integriert, sein. Als Elektronikeinheit eignet sich z.B. ein Mikrocontroller.

Die Elektronikeinheit kann Befehle oder Signale weiterleiten. Es ist denkbar, dass die Elektronikeinheit mit einer weiteren Kontrolleinheit zur Kontrolle der Bewegung des Bewegungselements in Verbindung steht, wobei die Kontrolleinheit außerhalb der Sensorvorrichtung angebracht sein kann. Kontrolle bedeutet in diesem Zusammenhang eine Steuerung und/oder Regelung des Bewegungselementes, das heißt über die Kontrolleinheit kann die Bewegung des Bewegungselementes gestartet oder beendet, gegebenenfalls auch beschleunigt oder abgebremst werden. Sendet z.B. die Elektronikeinheit ein Abschaltsignal an die Kontrolleinheit, da ein Hindernis erfasst wurde, stoppt diese Kontrolleinheit die Bewegung des Bewegungselements. Denkbar ist auch, dass die Elektronikeinheit selbst auch die Kontrolleinheit zur Kontrolle der Bewegung des Bewegungselementes bildet.

Denkbar ist aber auch, dass die Bewegung des Bewegungselementes von der Kontrolleinheit zunächst nicht gestoppt, sondern nur abgebremst wird, beispielsweise dann, wenn das Bewegungselement noch einen ausreichend großen Abstand zum Hindernis aufweist. Wird das Objekt bzw. das Hindernis rechtzeitig aus dem Bewegungsbereich herausbewegt, kann gegebenenfalls die Kontrolleinheit wieder dafür sorgen, dass die Bewegung des Bewegungselementes schneller verläuft.

Es besteht grundsätzlich die Möglichkeit, die Kontrolleinheit außerhalb der Sensorvorrichtung oder in der Sensorvorrichtung integriert unterzubringen. Ferner kann eine Elektronikeinheit, die mit der Kontrolleinheit zusammenwirkt, in der Sensorvorrichtung untergebracht sein. Es besteht aber auch die Möglichkeit, dass eine Kontrolleinheit außerhalb der Sensorvorrichtung direkt mit den Sensoren verbunden ist. Insbesondere kann bei einer Weiterbildung der Erfindung anhand der Entfernungssensoren darauf geschlossen werden, ob von den Sensoren gerade das Bewegungselement selbst oder das Objekt erfasst wird. Ist beispielsweise ein Sensor so angeordnet, dass er bei der Bewegung des Bewegungselements durch seinen überwachten Bereich die Entfernung zu dem erfassten Teil des Bewegungselements misst, so kann aus dieser Entfernungsmessung geschlossen werden, dass das Bewegungselement selbst und nicht ein Hindernis oder anderes Objekt erfasst wurde. Dies liegt daran, dass Hindernisse unter gewöhnlichen Umständen meistens weiter entfernt sind. Denkbar ist, dass der Sensor innerhalb der Führung selbst angeordnet und demzufolge eine kleine Entfernung misst, wenn das Bewegungselement durch diesen Bereich der Führung geführt wird. Denkbar ist auch, dass die Sensoren neben der Führung angebracht sind und ein Teil des Bewegungselements in den jeweils überwachten Bereich gelangt, sobald das Bewegungselement den entsprechenden Ort erreicht. Falls das Bewegungselement nicht über die Führung hinausragt und die Sensoren neben der Führung angeordnet sind, kann z.B. auch eine Blende oder Lasche am Bewegungselement angebracht sein, die eine vordefinierte Entfernung zum Sensor besitzt.

Zu einer Erhöhung der Detektionssicherheit können insbesondere die bestimmten Entfernungen mehrerer Entfernungssensoren miteinander verglichen werden. Bewegt sich beispielsweise ein Tor innerhalb der Führungsschiene, so ist es plausibel, dass das Bewegungselement, hier das Tor selbst, erfasst wurde, wenn oberhalb einer bestimmten Höhe von den Sensoren ausschließlich die für das Bewegungselement typischen Entfernungen jeweils festgestellt werden. Ein Hindernis wird typischerweise nicht in den Überwachungsbereich von oben nach unten eindringen bzw. ferner sich auch ortsfest oben im Überwachungsbereich weiter aufhalten.

Ferner ist es bei einem Ausführungsbeispiel der Erfindung möglich, die Bewegungsrichtung des Bewegungselementes und/oder die Bewegungsrichtung des Objektes zu bestimmen. Dies wird in vorteilhafter Weise dadurch ermöglicht, dass eine Entfernungsmessung durchgeführt wird. Anhand einer nachfolgenden Entfernungsmessung kann dann bestimmt werden, ob sich die entsprechende Entfernung verändert hat. Dieser Vergleich kann beispielsweise in der Kontrolleinheit durchgeführt werden. Zusätzlich ist es möglich, Sensoren dementsprechend so anzuordnen, dass ihre Strahlen entlang der Bewegungsrichtung des Bewegungselementes verlaufen und somit gegebenenfalls auch die Bewegung des Bewegungselementes detektiert werden kann.

Die Entfernungsmessung kann aber auch auf andere Art und Weise ausgenutzt werden. Beispielsweise kann es sein, dass mehrere Bewegungselemente nebeneinander angeordnet sind. Ferner ist es möglich, dass ein entsprechendes Objekt sich nur im Bewegungsbereich eines dieser Bewegungselemente befindet. Um zu verhindern, dass die Bewegung aller Bewegungselemente gestoppt wird, wenn das entsprechende Objekt von den Sensoren erfasst ist, kann die Bestimmung der Entfernung durch die Entfernungssensoren ausgenutzt werden. Durch diese Entfernungsmessung kann das entsprechende Objekt bzw. Hindernis nämlich genauer lokalisiert werden. Wie genau das entsprechende Objekt lokalisiert wird, hängt davon ab, wie die entsprechenden Sensoren der Sensorvorrichtung angeordnet sind und welchen Bereich sie erfassen können.

Wird bei einer derartigen Weiterbildung der Erfindung die Bewegungsrichtung des Objektes festgestellt, so kann ferner darauf geschlossen werden, welches Bewegungselement in seiner Geschwindigkeit zu beeinflussen, gegebenenfalls zu stoppen ist. Bewegt sich also beispielsweise eine Person zwischen mehreren Toren, so kann aus der Entfernung bzw. der Bewegungsrichtung darauf geschlossen werden, welches Bewegungselement gerade hinsichtlich seines Bewegungsraumes betroffen ist.

Insbesondere kann das Bewegungselement als Tor beispielsweise als Roll-, Sektional- oder als Schiebetor ausgebildet sein. Dementsprechend zeichnet sich ein erfindungsgemäßes Tor dadurch aus, dass eine Sicherungsvorrichtung gemäß der Erfindung bzw. eine entsprechende Ausführungsform oder Weiterbildung vorgesehen ist.

Zudem zeichnet sich ein Verfahren zur Kontrolle der Bewegung eines bewegbaren, in einer Führung geführten Bewegungselements anhand einer Sicherungsvorrichtung gemäß der Erfindung bzw. eine entsprechende Ausführungsform oder Weiterbildung dadurch aus, dass das Verfahren folgende Verfahrensschritte umfasst:

Es werden die von den Sensoren bestimmten Daten, also die bestimmten Entfernungen ausgelesen, wobei den Daten jeweils der Sensor zugeordnet werden kann, aus dem sie ausgelesen wurden. Die jeweiligen Daten werden mit einem Referenzwert verglichen. Dies geschieht z.B. in der Elektronikeinheit bzw. in der Kontrolleinheit. Als Referenzwert kann ein Wert dienen, der gemessen wird, wenn sich weder ein Objekt noch das Bewegungselement selbst im Überwachungsbereich befinden. Als Referenzwert kann auch die Entfernung dienen, welche gemessen wird, wenn sich das Bewegungselement im Überwachungsbereich befindet. Ferner kann, um z.B. Messtoleranzen zu berücksichtigen, auch ein anderer Wert festgelegt werden. Dadurch kann gegebenenfalls die Zuverlässigkeit des Verfahrens weiter verbessert werden. Es können Vergleiche mit einem oder mehreren Referenzwerten erfolgen. Sodann erfolgt eine Auswertung anhand der Vergleiche und anhand der Position des Sensors, der den entsprechenden Daten zugeordnet wurde.

Beispielsweise kann beim Schließen eines Tores im zeitlichen Verlauf festgestellt werden, dass ein Sensor nach dem anderen von oben nach unten Entfernungen kleiner oder gleich einem Referenzwert für ein in den überwachungsbereich geführtes Tor misst. Daraus kann in der Auswertung geschlossen werden, dass kein Hindernis in den Überwachungsbereich eingedrungen ist, sondern dass lediglich das Tor geschlossen wird.

Bei einer Weiterbildung der Erfindung können entsprechend Sensoren aktiviert bzw. deaktiviert werden. Ergibt beispielsweise die Auswertung, dass ein Sensor das sich bewegende Tor erfasst, kann er deaktiviert werden, d.h. er wird z.B. ausgeschaltet oder aber z.B. seine Messwerte werden nicht mehr in die Auswertung mit einbezogen. Der Begriff des Aktivierens kann analog verstanden werden.

### Ausführungsbeispiel

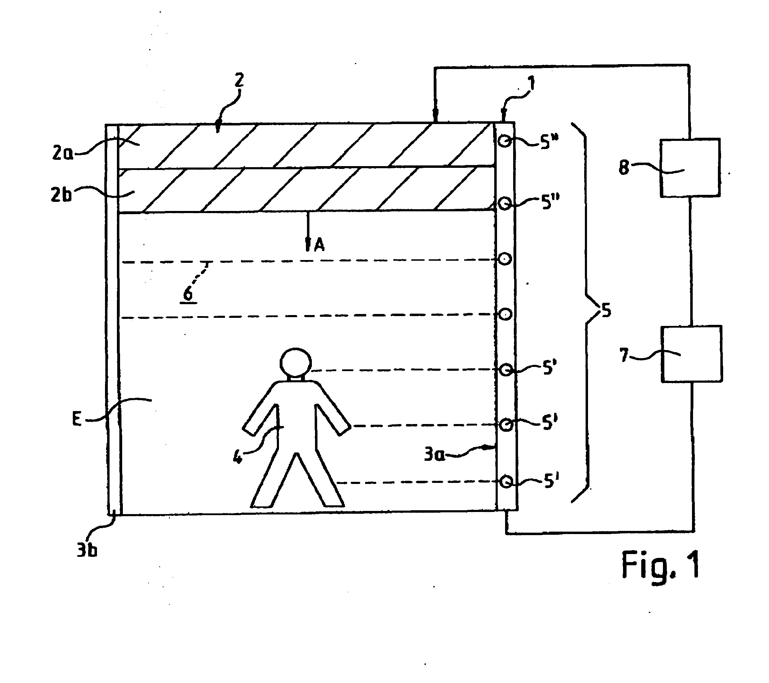

Ein Ausführungsbeispiel der Erfindung ist in der Zeichnung dargestellt und wird nachstehend im Einzelnen unter Angabe weiterer Vorteile näher erläutert. Im Einzelnen zeigt
Figur 1 eine Sicherheitsvorrichtung für ein Tor gemäß der Erfindung.

Figur 1 zeigt eine Sicherungsvorrichtung mit einer Sensorleiste 1 für ein Sektionaltor 2, dessen einzelne Sektionen 2a, 2b in Führungsschienen 3a, 3b laufen. Das Tor 2 bewegt sich dabei in der Bewegungsrichtung gemäß dem Pfeil A. Der Bewegungsbereich des Tores 2 mit der Bewegungsrichtung A wird durch die Ebene E beschrieben. In dieser Ebene befindet sich ein Objekt 4, hier eine Person. Würde die Bewegung des Tores 2 in Richtung A weiter fortgesetzt, so würde eine Kollision des Tores 2 mit der Person 4 erfolgen. Entlang der Führungsschiene 3a sind ist eine Sensorleiste 1 mit Entfernungssensoren 5 angebracht, wobei in Figur 1 die Führungsschiene 3a von der Sensorleiste 1 gerade verdeckt wird. Die Sensoren 5 senden Strahlen 6 aus und können deren Reflexionen auch wieder empfangen. Die Strahlen 6 verlaufen senkrecht zur Bewegungsrichtung unmittelbar vor der Ebene E. Die Strahlen verlaufen also in einem geringen Abstand zur Ebene E. Ferner verlaufen die Strahlen 6 senkrecht zur Sensorleiste 1 bzw. (in der Projektion der Figur 1) zur Führungsschiene 3a.

Die Entfernungssensoren 5 sind als TOF-Sensoren ausgebildet. Im unteren Abschnitt des Bewegungsbereichs treffen die Strahlen der Sensoren 5' auf die Person 4. Diese Sensoren 5' bestimmten jeweils einzeln die Entfernung zwischen der Führungsschiene 3a, in der sich die jeweiligen Sensoren 5' befinden, zu dem jeweiligen Auftreffpunkt auf der Person 4. Somit kann zunächst ermittelt werden, wie weit das Tor 2, das sich in Richtung A bewegt, etwa noch von der Person 4 entfernt ist, da bekannt ist, wie viele Sensoren 5 noch zwischen dem Tor 2 und der Person 4 liegen.

Die Sensoren 5" befinden sich in dem Bereich, der bereits vom Tor 2 entlang der Führungsschiene 3a durchfahren wurde. Diese Sensoren 5'' ermitteln daher eine Entfernung zu einem erfassten Objekt, nämlich einem Teil des Tores 2, der in den Uberwachungsbereich hineinragt. Die bestimmte Entfernung ist daher nur sehr gering und entspricht einem Referenzwert. Zudem werden bei der Bewegung des Tores von oben nach unten immer mehr Sensoren diesen Referenzwert messen. Diese Sensoren 5" lassen daher den Schluss zu, dass es sich bei dem erfassten Objekt nicht um ein Hindernis oder eine Person handeln kann, sondern dass das Tor 2 erfasst wurde.

Somit kann von den Sensoren 5 im Zusammenhang mit den Messungen der Sensoren 5' und 5" ermittelt werden, wo sich das Tor 2 befindet und wo sich gegebenenfalls ein Hindernis 4 befindet. Im vorliegenden Fall wird die Bewegung des Tores 2 gestoppt, da sich eine Person 4 im Überwachungsbereich aufhält, die von den Sensoren 5' ermittelt wurde.

Die Auswertung der Daten erfolgt in diesem Ausführungsbeispiel in einem Mikrocontroller, der in der Sensorleiste 1 integriert ist. Dieser Mikrocontroller ist dazu ausgebildet, im Falle eines Hindernisses im Uberwachungsbereich ein Abschaltsignal an die Steuerung 7 zu senden. Die Steuerung 7 steuert wiederum den Motor 8 für die Bewegung des Tores 2.

Bewegt sich ferner die Person 4 innerhalb der Ebene E, so kann von den Sensoren 5' ermittelt werden, in welcher Richtung und gegebenenfalls auch in welcher Geschwindigkeit diese sich bewegt.

Grundsätzlich ist es denkbar, den Gegenstand der Erfindung nicht nur im Bereich von Toren einzusetzen, sondern auch an Maschinen anzuordnen, um die Maschinensicherheit verbessern zu können.

### Bezugszeichenliste:

- 1: Sensorleiste
- 2: Tor
- 2a: Torsegment
- 2b: Torsegment
- 3a: Führungsschiene
- 3b: Führungsschiene
- 4: Person
- 5: TOF-Sensoren
- 5': TOF-Sensor (erfasst Person)
- 5'': TOF-Sensor (erfasst Tor)
- 6: Strahl
- 7: Steuerung
- 8: Motor
- A: Bewegungsrichtung des Tores
- E: Bewegungsebene

## Patentansprüche

1. Sicherungsvorrichtung zur Absicherung eines bewegbaren, in einer Führung geführten Bewegungselements gegen ungewollte Kollisionen de.s Bewegungselementes mit einem Objekt, das sich in einem Überwächungsbereich befindet, mit einer Sensorvorrichtung (1) zur Überwachung des Bewegungselements (2) in Bezug auf ungewollte Kollisionen des Bewegungselementes mit dem Objekt (4), mit wenigstens zwei Sensoren (5) zur Erfassung des Objektes, wobei die Sensoren einen Sender und einen Empfänger zum Aussenden und Empfangen von elektromagnetischen Strahlen (6) umfassen, wobei die Sensoren nebeneinander so angeordnet sind, dass sie parallel zur Führung (3a) anbringbar sind, und die Sensoren (5) ferner so ausgerichtet sind, dass die von ihnen ausgesandten Strahlen (6) den Überwächungsbereich durchsetzen, wobei die Sensoren (5) als Entfernungssensoren zur Bestimmung der Entfernung des Objektes (4) ausbebildet sind und eine Elektronikeinheit (7) zum Auslesen der von den Sensoren bestimmten Daten und zur Bereitstellung von Befehlen und/oder Signalen vorgesehen ist, **dadurch gekennzeichnet, dass** die Elektronikeinheit dazu ausgebildet ist, anhand der von wenigstens einem der Sensoren bestimmten Entfernung darauf zu schließen, ob das Bewegungselement oder das Objekt erfasst ist, indem die von den Sensoren ermittelte Entfernung
mit einem Referenzwert verglichen wird, wobei als Referenzwert die Entfernung dient, welche gemessen wird, wenn sich das Bewegungselement im Überwachungsbereich befindet.

2. Sicherungsvorrichtung nach Anspruch 1, **dadurch gekennzeichnet, dass** die Sensoren in einer Leiste angeordnet sind.

3. Sicherungsvorrichtung nach einem der vorgenannten Ansprüche, **dadurch gekennzeichnet, dass** wenigstens zwei der Sensoren (5) so ausgerichtet sind, dass ihre Strahlen parallel zueinander verlaufen.

4. Sicherungsvorrichtung nach einem der vorgenannten Ansprüche, **dadurch gekennzeichnet, dass** wenigstens einer der Sensoren (5) so angeordnet ist, dass seine Strahlen senkrecht zur Führung verlaufen.

5. Sicherungsvorrichtung nach einem der vorgenannten Ansprüche, **dadurch gekennzeichnet, dass** wenigstens einer der Sensoren (5) wie folgt ausgebildet ist :
- Infrarot-Reflexionssensor oder
- Time-of-flight-Sensor oder
- 3D-Sensor.

6. Sicherungsvorrichtung einem der vorgenannten Ansprüche, **dadurch gekennzeichnet, dass** wenigstens einer der Sensoren (5) so ausgebildet ist, dass seine Strahlen einen kegelförmigen Bereich durchsetzen.

7. sicherungsvorrichtung nach einem der vorgenannten Ansprüche, **dadurch gekennzeichnet, dass** die Elektronikeinheit dazu ausgebildet ist, anhand der Sensorvorrichtung die Bewegungsrichtung des Bewegungselementes und/oder des Objektes zu bestimmen.

8. Sicherungsvorrichtung nach einem der vorgenannten Ansprüche, **dadurch gekennzeichnet, dass** eine Kontrolleinheit zur Kontrolle des Bewegungselements vorgesehen ist, welche die Elektronikeinheit umfasst oder welche mit der Elektronikeinheit verbindbar ist.

9. Tor (2), insbesondere Roll-, Sektional- oder Schiebetor, **dadurch gekennzeichnet, dass** eine Sicherungsvorrichtung nach einem der vorgenannten Ansprüche vorhanden ist.

10. Verfahren zur Kontrolle der Bewegung eines bewegbaren, in einer Führung geführten Bewegungselements anhand einer Sicherungsvorrichtung nach einem der vorgenannten Ansprüche, **dadurch gekennzeichnet, dass** das Verfahren folgende Verfahrensschritte umfasst:
- Auslesen der von den Sensoren (5) bestimmten Daten und Zuordnung der jeweiligen Daten zum jeweils ausgelesenen Sensor (5)
- Vergleich der jeweiligen Daten mit wenigstens einem Referenzwert
- Auswertung anhand des Vergleichs und anhand der Position des zugeordneten Sensors (5).

11. Verfahren nach einem der vorgenannten Ansprüche, **dadurch gekennzeichnet, dass** eine Aktivierung und/oder Deaktivierung wenigstens eines der Sensoren (5) in Abrängigkeit von der Auswertung erfolgt.

## Claims

1. Safety device for protection of a movable moving element, which is guided in a guide, against unwanted collisions of the moving element with an object which is located in a monitoring area, with a sensor device (1) for monitoring the moving element (2) with regard to unwanted collisions of the moving element with the object (4), having at least two sensors (5) for detecting the object, wherein the sensors comprise a transmitter and a receiver for transmitting and receiving electromagnetic beams (6), wherein the sensors are arranged next to each other so that they can be attached parallel to the guide (3a), and the sensors (5) are also orientated so that the beams (6) which are transmitted by them pass through the monitoring area, wherein the sensors (5) are designed as distance sensors for determining the distance of the object (4), and an electronic unit (7) is provided for reading out the data which is determined by the sensors and for providing commands and/or signals, **characterized in that** the electronic unit is designed to deduce on the basis of the distance determined by at least one of the sensors whether the moving element or the object is detected, by the distance established by the sensors being compared with a reference value, wherein the distance which is measured when the moving element is located in the monitoring area serves as the reference value,

2. Safety device according to Claim 1, **characterized in that** the sensors are arranged in a strip.

3. Safety device according to one of the aforesaid claims, **characterized in that** at least two of the sensors (5) are orientated so that their beams extend parallel to each other.

4. Safety device according to one of the aforesaid claims, **characterized in that** at least one of the sensors (5) is arranged so that its beams extend perpendicular to the guide.

5. Safety device according to one of the aforesaid claims, **characterized in that** at least one of the sensors (5) is designed as follows:
- infrared reflection sensor or
- time-of-flight sensor or
- 3D sensor.

6. Safety device according to one of the aforesaid claims, **characterized in that** at least one of the sensors (5) is designed so that its beams pass through a conical area.

7. Safety device according to one of the aforesaid claims, **characterized in that** the electronic unit is designed to determine the movement direction of the moving element and/or of the object with the aid of the sensor device.

8. Safety device according to one of the aforesaid claims, **characterized in that** a control unit is provided for controlling the moving element, which control unit comprises the electronic unit or which can be connected to the electronic unit.

9. Door (2), especially roller door, sectional door or sliding door, **characterized in that** a safety device is provided according to one of the aforesaid claims.

10. Method for controlling the movement of a movable moving element, which is guided in a guide, with the aid of a safety device according to one of the aforesaid claims, **characterized in that** the method comprises the following method steps:
- read-out of the data which is determined by the sensors (5) and association of the respective data with the selected sensor (5) in each case
- comparison of the respective data with at least one reference value
- evaluation based on the comparison and based on the position of the associated sensor (5).

11. Method according to one of the aforesaid claims, **characterized in that** activation and/or deactivation of at least one of the sensors (5) is carried out as a function of the evaluation.

## Revendications

1. Dispositif de sécurité pour la sécurisation d'un élément de mouvement mobile guidé dans un guidage contre des collisions indésirables de l'élément de mouvement avec un objet qui se trouve dans la zone de surveillance, avec un dispositif à capteur (1) pour la surveillance de l'élément de mouvement (2) en ce qui concerne les collisions indésirables de l'élément de mouvement avec l'objet (4), avec au moins deux capteurs (5) pour la détection de l'objet, les capteurs comprenant un émetteur et un récepteur pour l'émission et la réception de rayonnements électromagnétiques (6), les capteurs étant disposés les uns à côté des autres de façon à ce qu'ils puissant être posés parallèlement au guidage (3a) et les capteurs (5) étant en outre orientés de façon à ce que les rayonnements (6) qu'ils émettent traversent la zone de surveillance, les capteurs (5) étant conçus comme des capteurs de distance pour la détermination de la distance de l'objet (4) et une unité électronique étant prévue pour la lecture des données déterminées par les capteurs et pour l'envoi de commandes et/ou de signaux, **caractérisé en ce que** l'unité électronique est conçue pour déterminer, à partir, d'une distance déterminée par au moins un des capteurs, si l'élément de mouvement ou l'objet est détecté, en comparant la distance déterminée par les capteurs avec une valeur de référence, la valeur de référence utilisée étant la distance mesurée lorsque l'élément de mouvement se trouve dans la zone de surveillance.

2. Dispositif de sécurité selon la revendication 1, **caractérisé en ce que** les capteurs sont disposés dans une première barre.

3. Dispositif de sécurité selon l'une des revendications précédentes, **caractérisé en ce qu'**au moins deux des capteurs (5) sont orientés de façon à ce que leurs rayonnements soient parallèles.

4. Dispositif de sécurité selon l'une des revendications précédentes, **caractérisé en ce qu'**au moins un des capteurs (5) est disposé de façon à ce que ses rayonnements soient émis perpendiculairement au guidage.

5. Dispositif de sécurité selon l'une des revendications précédentes, **caractérisé en ce qu'**au moins un des capteurs (5) est conçu comme suit :
- capteur à réflexion infrarouge ou
- capteur time-of-flight ou
- capteur 3D.

6. Dispositif de sécurité selon l'une des revendications précédentes, **caractérisé en ce qu'**au moins un des capteurs (5) est conçu de façon à ce que ses rayonnements traversent une zone conique.

7. Dispositif de sécurité selon l'une des revendications précédentes, **caractérisé en ce que** l'unité électronique est conçue pour déterminer, grâce au dispositif à capteur, la direction de mouvement de l'élément de mouvement et/ou de l'objet.

8. Dispositif de sécurité selon l'une des revendications précédentes, **caractérisé en ce qu'**une unité de contrôle est prévue pour le contrôle de l'élément de mouvement, qui comprend l'unité électronique ou qui peut être connectée à l'unité électronique.

9. Porte (2), plus particulièrement porte roulante, sectionnelle ou coulissante, **caractérisée en ce qu'**un dispositif de sécurité selon l'une des revendications précédentes est prévu.

10. Procédé de contrôle du mouvement d'un élément de mouvement mobile et guidé dans un guidage, à l'aide d'un dispositif de sécurité selon l'une des revendications précédentes, **caractérisé en ce que** le procédé comprend les étapes suivantes :
- lecture des données déterminées par les capteurs (5) et attribution des données au capteur (5) lu correspondant
- comparaison des données avec au moins une valeur de référence
- analyse à l'aide de la comparaison et de la position du capteur (5) correspondant.

11. Procédé selon l'une des revendications précédentes, **caractérisé en ce qu'**une activation et/ou désactivation d'au moins un des capteurs (5) a lieu en fonction de l'analyse.
